**Europäisches Patentamt**

**European Patent Office**

**Office européen des brevets**

(19)

(11) Veröffentlichungsnummer : **0 385 074 B1**

(12) # EUROPÄISCHE PATENTSCHRIFT

(45) Veröffentlichungstag der Patentschrift :
**09.06.93 Patentblatt 93/23**

(51) Int. Cl.⁵ : **H04L 27/14**

(21) Anmeldenummer : **90100757.5**

(22) Anmeldetag : **15.01.90**

(54) **Verfahren zur Demodulation von MSK-Signalen.**

(30) Priorität : **27.02.89 EP 89103421**

(43) Veröffentlichungstag der Anmeldung :
**05.09.90 Patentblatt 90/36**

(45) Bekanntmachung des Hinweises auf die
Patenterteilung :
**09.06.93 Patentblatt 93/23**

(84) Benannte Vertragsstaaten :
**AT BE CH DE DK ES FR GB GR IT LI NL SE**

(56) Entgegenhaltungen :
**US-A- 3 969 590**
**Electronics Letters vol. 21, no. 14, 4 Juli 1985,**
**Stevenage, Herts, GB Seiten 586 - 587 ; W.**
**Rafferty et al.: "Variable-delay sine/cosine**
**noncoherent detector "**

(73) Patentinhaber : **SIEMENS**
**AKTIENGESELLSCHAFT**
**Wittelsbacherplatz 2**
**W-8000 München 2 (DE)**

(72) Erfinder : **Ringelhaan, Otmar, Dipl.-Ing.**
**Zugspitzstrasse 9**
**W-8919 Greifenberg (DE)**
Erfinder : **Fenske, Horst, Dipl.-Ing.**
**Lerchenauerstrasse 43**
**W-8000 München 40 (DE)**
Erfinder : **Eichiner, Gerhard, Dipl.-Phys.**
**Josef-Lutz-Weg 35**
**W-8000 München 70 (DE)**

EP 0 385 074 B1

## Beschreibung

Die Erfindung bezieht sich auf ein Verfahren zur Demodulation von MSK-Signalen (MSK = Minimum Shift Keying).

Bei der digitalen Datenübertragung werden aus Gründen der Frequenzbandökonomie gewöhnlich lineare Modulationsverfahren, wie Einseitenbandmodulation (ESB) oder Quadraturamplitudenmodulation (QAM) angewendet. Im Fall von ESB und damit identischer offset-QAM - letztere entsteht dadurch, daß die geraden und ungeraden Bits einer bestimmten Bit-Rate zwei verschiedenen, jeweils eine Verarbeitungsspur darstellenden Signalwegen mit je einem Ringmischer zugeführt werden, deren Ausgänge wieder vereinigt werden - kann die sende- und empfangsseitige Signalverarbeitung auch einspurig ausgeführt werden durch Erzeugen der QAM mit einem Transversalfilter. Minimum (Frequency) Shift Keying (MSK) und deren Derivate, wie Gaußian MSK (GMSK) und Tamed Frequency Modulation (TFM) sind zwar nichtlineare Modulationsverfahren, aber bei entsprechender Aufbereitung (Vorcodierung) einer ESB sehr ähnlich. Insbesondere läßt sich ein MSK-Signal ähnlich einer offset-QAM-Verarbeitung durch zwei zueinander orthogonale Träger in Bandmitte in ein allerdings zweispuriges Basisband demodulieren. Demodulieren bedeutet in diesem Zusammenhang, daß zu bestimmten Zeitpunkten eine Entscheidung über den Nachrichteninhalt gefällt werden kann. Eine einspurige ESB-Demodulation ist zwar ebenfalls durchführbar, führt jedoch insbesondere beim Vorliegen linearer Verzerrungen zu erheblichen Qualitätseinbußen, die sich auf einfache Weise nicht mehr beheben lassen. Der Grund dafür sind jene spektralen Anteile, die nach erfolgter Demodulation an der Frequenz Null gespiegelt in das Basisband projäziert werden und dort, anders als bei einem Nyquist-Spektrum nicht ergänzend, sondern störend wirken.

Der Erfindung liegt die Aufgabe zugrunde, ein Verfahren zur Demodulation von MSK-Signalen zu schaffen, das sehr einfach ist und mit hoher Präzision arbeitet.

Diese Aufgabe wird gemäß der Erfindung gelöst durch eine Umsetzung des Empfangssignals in eine Zwischenfrequenz, die der Bedingung
$$f(ZF) = ft/4 + n \cdot ft/2 \qquad \text{für } n \geq 1,$$
genügt, und anschließende Abtastung dieses Signals mit der Periode 1/ft, wobei ft die Taktfrequenz der modulierenden Nachricht ist.

Im Sinne einer einfachen Weiterverarbeitung ist vorgesehen, daß für geradzahliges n das Signalspektrum in Normallage, andernfalls in Kehrlage zu liegen kommt.

Anders als bei Demodulation ins Basisband ist bei dem erfindungsgemäßen Verfahren mit Umsetzung in eine Zwischenfrequenz eine nachträgliche Entzerrung des Signals einschließlich Korrektur der Demodulationsträgerphase ohne Qualitätseinbuße durchführbar.

## Patentansprüche

1. Verfahren zur Demodulation von MSK-Signalen (Minimum Shift Keying), **gekennzeichnet durch** eine Umsetzung des Empfangssignals in eine Zwischenfrequenz, die der Bedingung
$$f(ZF) = ft/4 + n \cdot ft/2 \qquad \text{für } n \geq 1,$$
genügt, und anschließende Abtastung dieses Signals mit der Periode 1/ft, wobei ft die Taktfrequenz der modulierenden Nachricht ist.

2. Verfahren nach Anspruch 1, **dadurch gekennzeichnet,** daß für geradzahliges n das Signalspektrum in Normallage, für ungeradzahliges n in Kehrlage zu liegen kommt.

## Claims

1. Method for demodulating MSK signals (minimum shift keying), characterised by a conversion of the received signal into an intermediate frequency which satisfies the condition
$$f(ZF) = ft/4 + n \cdot ft/2 \qquad \text{where } n \geq 1,$$
and subsequent sampling of said signal with the period 1/ft, where ft is the clock frequency of the modulated message.

2. Method according to Claim 1, characterised in that when n is even the signal spectrum comes to lie in the normal position, and when n is odd it comes to lie in the inverted position.

## Revendications

1. Procédé pour démoduler des signaux MSK (Minimum Shift Keying), caractérisé par une conversion du signal de réception à une fréquence intermédiaire qui satisfait à la condition
$$f(ZF) = ft/4 + n \cdot ft/2 \qquad \text{pour } n \geq 1,$$
et par un échantillonnage ultérieur de ce signal avec une période 1/ft, ft étant la fréquence de cadence du signal modulant.

2. Procédé suivant la revendication 1, caractérisé par le fait que pour n pair, le spectre du signal vient se placer dans la position normale, alors que pour n impair, il vient se placer dans la position inverse.